# EUROPÄISCHE PATENTSCHRIFT

(11) **EP 2 146 232 B1**
(45) Veröffentlichungstag und Bekanntmachung des Hinweises auf die Patenterteilung: **26.12.2018**
(21) Anmeldenummer: 09008787.5
(22) Anmeldetag: 04.07.2009
(51) Int. Cl.: G02B 6/38, G02B 6/42

(54) **Steckerteil für eine optische Steckverbindung**
Connector for an optical connection
Connecteur pour un raccordement optique

(30) Priorität: 15.07.2008 DE 102008033232
(43) Veröffentlichungstag der Anmeldung: 20.01.2010
(73) Patentinhaber: Neutrik AG, 9494 Schaan (LI)
(72) Erfinder: Dobler, Oliver, 6774 Tschagguns (AT)
(74) Vertreter: Hofmann, Ralf U.

(56) Entgegenhaltungen:
- EP-A- 1 271 204
- EP-A- 1 598 685
- EP-A- 1 662 286
- EP-A- 1 936 415
- US-A- 6 004 147

## Beschreibung

Die vorliegende Erfindung betrifft ein Steckerteil gemäß des Oberbegriffs des Patentanspruchs 1.

Zur oben genannten Art ähnliche Steckerteile sind z.B. aus der DE 10 2004 025 512 A1 bzw. der EP 1 598 685 A1 bekannt. Die Steckerteile können ein oder mehrere Lichtleiter aufweisen, wobei diese Lichtleiter der Steckverbinder durch Ineinanderstecken der Steckerteile miteinander verbunden werden. Aus der genannten Schrift ist es bekannt, Verschlussklappen vorzusehen, welche durch Verschieben der Verschiebeteile verschwenkt werden, wobei diese Verschlusskappen Aufnahmekanäle für die die Lichtleiter ummantelnden Ferrulen verschließen. Dies hat zum Einen den Nachteil, dass für jeden Aufnahmekanal eine eigene Verschlussklappe vorgesehen werden muss, was bei Steckerteilen mit mehreren Lichtleitern sehr aufwendig werden kann. Darüber hinaus haben solche Steckerteile den Nachteil, dass nicht der gesamte Innenraum im Gehäuse sondern eben nur die Aufnahmekanäle für die Ferrulen abgedeckt und damit geschützt sind.

In den gattungsgemäßen Schriften EP 1 936 415 A1 und EP 1 662 286 A1 ist bezüglich dieses Problems vorgesehen, dass die Durchtrittsöffnung im Verschiebeteil in zumindest einer Schließstellung der Verschlusskappe, vorzugsweise vollständig, von der Verschlussklappe verschlossen ist.

Bei diesen gattungsgemäßen Steckerteilen sind verschiedene Teile des Steckerteils gegeneinander verschiebbar. Um ein Eindringen von Verschmutzungen auch zwischen den relativ zueinander verschiebbaren Teilen des Steckerteils dauerhaft zu gewährleisten, benötigt man eine Art von Dichtung, welche mit möglichst geringem bzw. gar keinem Verschleiß das Verschieben von Teilen relativ zueinander innerhalb des Steckerteils erlaubt und trotzdem dauerhaft abdichtet.

Aufgabe der Erfindung ist es, gattungsgemäße Steckerteile dahingehend zu verbessern.

Erfindungsgemäß wird dies mit einem Steckerteil gemäß Patentanspruch 1 erreicht.

Durch die genannte Längserstreckung des Führungsraums ist es möglich, dass sich der

Dichtungsring z.B. durch Abrollen im Führungsraum in die jeweilige Verschieberichtung verschiebt, in welche das Verschiebeteil gerade verschoben wird. Hierdurch werden die am Dichtungsring auftretenden Reibungskräfte reduziert. Zusätzlich wird auch die Abnutzung minimiert, sodass eine dauerhafte und sichere Abdichtung gewährleistet ist.

Die Verschlussklappe ist so am Steckerteil anzubringen, dass diese nicht nur, wie beim Stand der Technik bekannt, einzelne Aufnahmekanäle für Lichtleiter, sondern die Durchtrittsöffnung im Verschiebeteil an sich verschließt. Hierdurch ist der gesamte dahinterliegende Raum geschützt. Günstigerweise ist zwischen Verschiebeteil und Verschlussklappe dabei eine Dichtung vorgesehen, die die Verschlussklappe in ihrer Schließstellung gegen das Verschiebeteil abdichtet. Dabei kann sowohl ein staub- als auch feuchtigkeitsdichter Abschluss erreicht werden. Das Wort "verschlossen" umfasst aber auch die Fälle, in denen die Verschlussklappe die Durchtrittsöffnung lediglich abdeckt, wenn es mehr um einen rein mechanischen Schutz der Lichtleiter bzw. der anderen Bauteile innerhalb des Gehäuses geht. Auch der Begriff der Steckverbindung ist sehr allgemein aufzufassen. Es geht hierbei zunächst einmal um ein, vorzugsweise lineares, Zusammenführen von zwei Steckerteilen, wobei gegebenenfalls aber auch zusätzlich Schraub-, Dreh- oder sonstige Bewegungen zum Verbinden der Steckerteile notwendig bzw. vorgesehen sein können. Unter der Bezeichnung "innerhalb des Gehäuses" wird insbesondere verstanden, dass sich der jeweilige Bauteil zumindest zum Teil in einem vom Gehäuse ummantelten Innenraum befindet. Das relativ zum Gehäuse verschiebbare Verschiebeteil kann in diesem Sinne an dem Gehäuse oder insbesondere innerhalb des Gehäuses angeordnet sein. Es muss aber nicht zwingend direkt am Gehäuse gelagert sein. Diese Lagerung kann auch durch Zwischenschaltung von anderen Bauteilen erfolgen.

Um mit der Verschlussklappe einen möglichst großen Teil des Innenraums im Gehäuse abschirmen zu können, ist günstigerweise vorgesehen, dass das Verschiebeteil eine Stirnfläche aufweist, welche vorzugsweise zumindest in der Schließstellung der Verschlussklappe, auf einer vom Lichtleiter abgewandten Außenseite des Verschiebeteils angeordnet ist, und die Durchtrittsöffnung eine Öffnung in der Stirnfläche ist. Dies ermöglicht es, den Steckerteil mittels der Verschlusskappe möglichst weit vorne verschließen zu können. Die Stirnfläche ist günstigerweise die Fläche, auf die zum Verschieben des Verschiebeteils z.B. durch eine zweite Stirnfläche eines Verschiebeteils eines anderen Steckerteils eine Kraft ausgeübt wird. Die Stirnfläche ist somit günstigerweise der Teil des Verschiebeteils, der im normalen Gebrauch mit Kraft beaufschlagt wird, um das Verschiebeteil zu verschieben.

Erfindungsgemäße Steckerteile können insbesondere dafür eingesetzt werden, gleichzeitig mehrere Lichtleiter eines jeden Steckerteils durch einen einzigen Steckvorgang miteinander zu verbinden. In diesem Sinne ist günstigerweise vorgesehen, dass innerhalb des Gehäuses eines jeden Steckerteils zumindest zwei, vorzugsweise zumindest drei oder zumindest vier, Lichtleiter angeordnet sind. Dabei kann vorgesehen sein, dass die Lichtleiter, vorzugsweise gemeinsam, in einem Lichtleiterträger gehalten sind, welcher, vorzugsweise relativ zum Gehäuse unverschiebbar, innerhalb des Gehäuses angeordnet ist.

Die Durchtrittsöffnung im Verschiebeteil, vorzugsweise in dessen Stirnfläche, ist günstigerweise so groß ausgeführt, dass die, vorzugsweise alle, innerhalb des Gehäuses des Steckerteils angeordneten Lichtleiter gemeinsam, vorzugsweise der innerhalb des Gehäuses des Steckerteils angeordnete Lichtleiterträger, oder die, vorzugsweise alle, Lichtleiter eines anderen Steckerteils der Steckverbindung gemeinsam und/oder ein Lichtleiterträger eines anderen Steckerteils der Steckverbindung in zumindest einer Stellung des Verschiebeteils, in der die Verschlussklappe die Durchtrittsöffnung, vorzugsweise vollständig, freigibt, durch die Durchtrittsöffnung hindurchgeführt sind (ist).

Im Sinne einer automatischen Rückstellung des Verschiebeteils nach Wegfall der Belastung der Stirnfläche ist günstigerweise vorgesehen, dass der Steckerteil zumindest eine Rückstellfeder für das Verschiebeteil aufweist, gegen deren Krafteinwirkung das Verschiebeteil aus seiner Stellung, in der die Verschlussklappe die Durchtrittsöffnung verschließt, in Richtung hin zu dem oder den Lichtleitern verschiebbar ist. Die Rückstellfeder ist günstigerweise am Gehäuse oder an einem Lichtleiterträger im Gehäuse abgestützt. Darüber hinaus ist bevorzugterweise eine Klappenrückstellfeder vorgesehen. Diese beaufschlagt die Verschlussklappe in Richtung ihrer Schließstellung, sodass die Verschlussklappe von der Klappenrückstellfeder wieder in ihre Schließstellung zurückgestellt wird, vorzugsweise wenn bzw. sobald es bei Entlastung des Verschiebeteils von, von außen auf diesen wirkenden Kräften kommt. Bei der Rückstellfeder für das Verschiebeteil und der Klappenrückstellfeder für die Verschlussklappe kann es sich um eine einzige Feder handeln. In den gezeigten Ausführungsbeispielen handelt es sich aber jeweils um zwei voneinander getrennte Federn. Natürlich sind auch mehr als zwei Federn möglich, falls dies in einer konkreten Ausführungsvariante sinnvoll erscheint. Darüber hinaus ist es auch möglich, dass die Klappenrückstellfeder als Drehlager für die Klappe dient bzw. dieses Drehlager bildet.

Gattungsgemäße Steckverbindungen bzw. Steckerteile haben häufig zumindest abschnittsweise eine im Querschnitt abgerundete, insbesondere zylindermantelförmige, Innen- und/oder Außenkonturen. Um den Platz innerhalb des Gehäuses optimal auszunutzen, ist es günstig, wenn die Verschlussklappe zumindest abschnittsweise eine gebogene, vorzugsweise in Form eines Rohrmantelabschnitts oder eines Zylindermantelabschnitts oder einer Kugeloberfläche ausgebildete, Außenkontur aufweist. Hierdurch kann die Verschlussklappe so groß ausgeführt werden, dass sie eine relativ große Durchtrittsöffnung verschließen kann, ohne dabei übermäßig Platz im Inneren des Gehäuses zu verbrauchen. Beim Begriff des Rohrmantelabschnittes handelt es sich um gebogene Bereiche, die nicht zwingend kreisförmig gebogen sein müssen, wie dies bei Zylindermantelabschnitten der Fall ist. Es können auch andere von der Kreisform abweichende Krümmungen im Querschnitt der Rohrmantelabschnitte vorgesehen sein.

Weitere Merkmale und Einzelheiten bevorzugter Ausführungsbeispiele der Erfindung werden im Folgenden anhand der Figuren erläutert. Dabei zeigen:
Fig. 1 bis 10 verschiedene Darstellungen zu einem als Steckmuffe ausgebildeten erfindungsgemäßen Steckerteils einer optischen Steckverbindung;
Fig. 11a bis 22 Darstellungen zu einem zu diesem Muffensteckerteil korrespondierenden, männlichen Steckerteil dieser optischen Steckverbindung;
Fig. 23 und 24 Darstellungen dieser Steckverbindung, wenn der männliche Steckerteil vollständig in den Muffensteckerteil eingeschoben ist.

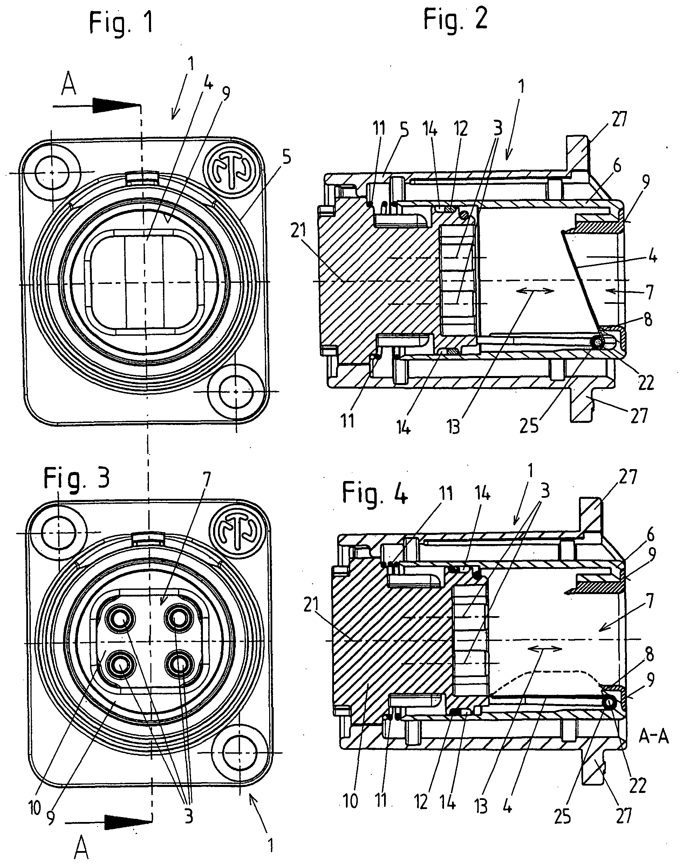

Bei dem erfindungsgemäßen Steckerteil 1 gemäß der Fig. 1 bis 10 handelt es sich um einen Muffensteckerteil bzw. Steckeraufnahmeteil der zur Montage in einem Durchgangsloch in einer Wandung vorgesehen ist. Er weist hierzu einen am Gehäuse 5 angeordneten Befestigungsflansch 27 auf, wie dies beim Stand de Technik an sich bekannt ist. Der Muffensteckerteil bzw. Steckeraufnahmeteil ist dabei der Steckerteil, in dem bzw. in dessen Gehäuse die weiblichen Lichtleiter bzw. Aufnahmehülsen für die männlichen Lichtleiter angeordnet sind.

Die Fig. 1 und 3 zeigen Ansichten auf dieses Steckerteil 1, aus der Richtung, aus der der korrespondierende männliche Steckerteil bzw. der Einsteckteil eingeschoben wird. Fig. 1 zeigt die Stellung, in der die Verschlussklappe 4 die Durchtrittsöffnung 7 vollständig verschließt. Fig. 2 zeigt den Längsschnitt in dieser Stellung gemäß der Schnittlinie AA. Fig. 3 zeigt eine Draufsicht wie Fig. 1, allerdings ist hier die Verschlussklappe 4 zurückgeklappt, sodass die Durchtrittsöffnung 7 vollständig geöffnet und die vier in diesem Steckerteil angeordneten Lichtleiter 3 zu sehen sind. Die Befestigung und Lagerung der Lichtleiter 3 in dem Lichtleiterträger 10 erfolgt wie an sich bekannt. Dabei werden üblicherweise Ferrulen, welche die Lichtleitfasern 3 aufnehmen, an deren Enden angeordnet. Die Ferrulen können beweglich oder fix im Lichtleiterträger 10 angeordnet sein. Die Ferrulen und der Lichtleiterträger können wie beim Stand der Technik an sich bekannt ausgeführt sein.

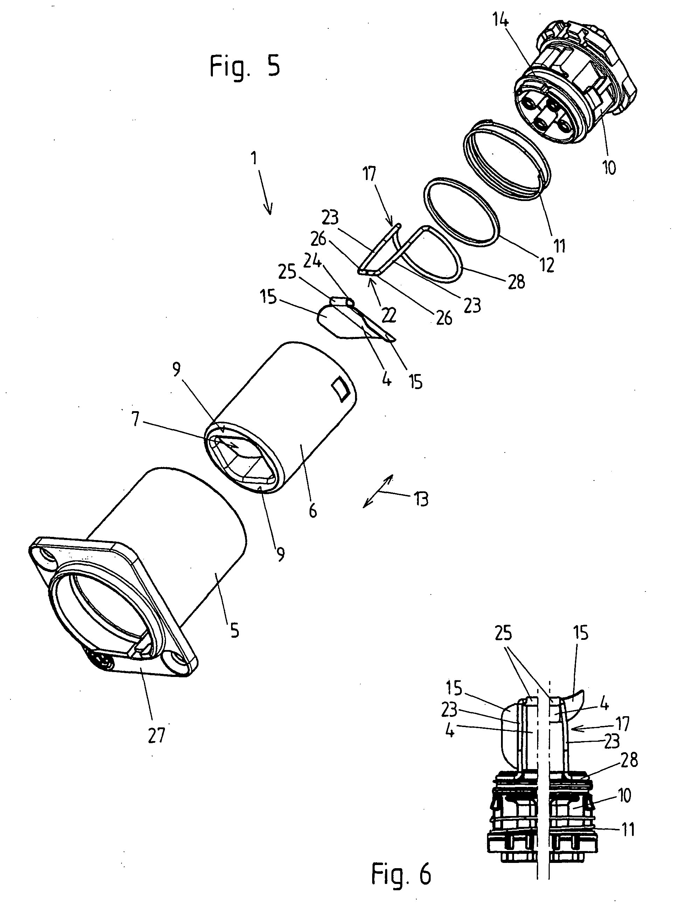

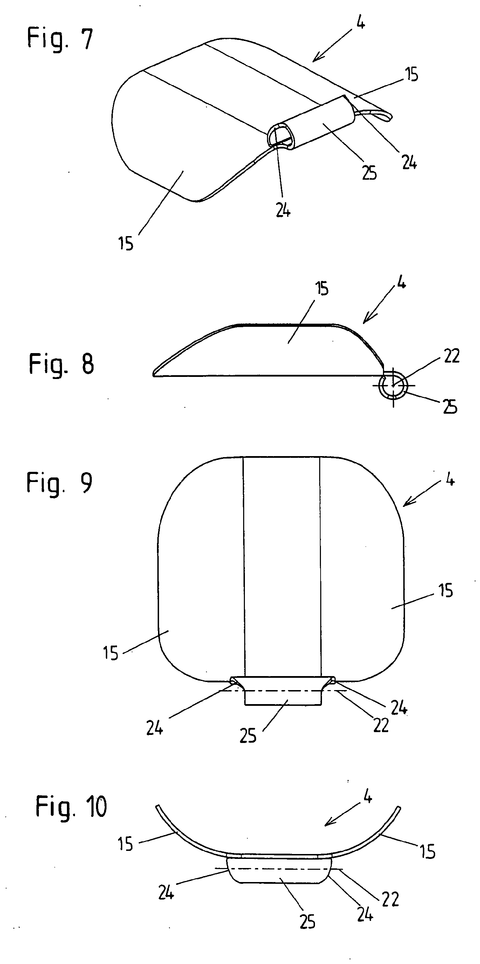

Fig. 4 zeigt einen Längsschnitt analog zu Fig. 2 allerdings durch die in Fig. 3 gezeigte Öffnungsstellung entlang der Schnittlinie AA. Fig. 5 zeigt die einzelnen Bauteile dieses Steckerteils 1 in einer Explosionsdarstellung. Fig. 6 zeigt zur Erläuterung der Funktionsweise der Klappenrückstellfeder 17 dieses Ausführungsbeispiels die in diesem Ausführungsbeispiel auf dem Lichtleiterträger 10 abgestützte und befestigte Klappenrückstellfeder 17, wobei die linke Hälfte dieser Darstellung die Verschlussklappe 4 in der vollständig geöffneten Stellung zeigt und der rechte Teil von Fig. 6 die Verschlussklappe 4 in ihrer Schließstellung zeigt. Die restlichen Bauteile dieses Steckerteils 1 sind in dieser Darstellung der Übersichtlichkeit halber weggelassen. Die Fig. 7 bis 10 zeigen noch verschiedene Ansichten der Verschlussklappe 4 dieses Ausführungsbeispiels.

Der genauere Aufbau und die Funktionsweise des Steckerteils 1 wird anhand der soeben genannten Figuren erläutert.

Das Verschiebeteil 6 ist in diesem Ausführungsbeispiel linear verschiebbar, entlang der Verschieberichtung 13 innerhalb des Gehäuses 5 gelagert. Die Verschieberichtungen 13 liegen günstigerweise parallel zur Längsmittelachse 21 des Steckerteils 1 bzw. des Gehäuses 5. Das Schiebeteil 6 ist im konkreten Ausführungsbeispiel des Steckerteils 1 verschiebbar am Lichtleiterträger 10 gelagert. Zur Abdichtung ist der Dichtungsring 12 vorgesehen. Dieser ist in einem parallel zu der Verschieberichtung 13 des Verschiebeteils 6 längserstreckten, hier ringmantelförmig ausgebildeten Führungsraum 14 angeordnet. Durch die Längserstreckung dieses Führungsraumes 14 ist es möglich, dass sich der Dichtungsring 12 z.B. durch Abrollen in dem Führungsraum 14 in die jeweilige Verschieberichtung 13 verschiebt, in welche das Verschiebeteil 6 gerade gegenüber dem Lichtleiterträger 10 verschoben wird. Durch dieses insbesondere rollende Verschieben des Dichtungsringes 12 werden vorrangig die Reibungskräfte reduziert. Zusätzlich wird die Abnutzung minimiert, sodass eine dauerhafte und sichere Abdichtung gewährleistet ist. Natürlich kann ein solcher, in einem längserstreckten Führungsraum 14 geführter Dichtungsring nicht nur an der konkret in Fig. 2 und 4 besonders gut zu sehenden Stelle bzw. Funktion verwendet werden. Es ist vielmehr auch möglich, dass dieser Dichtungsring zwischen dem Verschiebeteil 6 und dem Gehäuse 5, oder zwischen dem Verschiebeteil 6 und einem anderen vorzugsweise gehäusefesten Bauteil des Steckerteils angeordnet ist bzw. wirkt. Unter "gehäusefest" wird dabei allgemein verstanden, dass zwischen dem gehäusefesten Bauteil und dem Gehäuse keine Relativbewegung stattfindet bzw. stattfinden kann.

Zur Rückstellung des Verschiebeteils 6 von der in Fig. 4 gezeigten Stellung in die, in Fig. 2 gezeigte Stellung, die der Schließstellung der Verschlussklappe 4 entspricht, ist die Rückstellfeder 11 vorgesehen. Diese ist im konkret gezeigten Ausführungsbeispiel des Steckerteils 1 am Lichtleiterträger 10 abgestützt, und trägt auf ihrer gegenüberliegenden Seite das von der Stirnfläche 9 abgewendete Ende des Verschiebeteils 6 und ist in der Weise so vorgespannt, dass das Verschiebeteil 6 in die in Fig. 2 gezeigte Stellung gedrückt wird. Konkret handelt es sich hierbei um eine Schraubenfeder. Natürlich können auch andere elastische Körper verwendet werden. Auch eine Abstützung der Rückstellfeder 11 am Lichtleiterträger 10 ist nicht zwingend notwendig. Eine Abstützung kann vielmehr auch direkt am Gehäuse 5 oder an einem damit vorzugsweise gehäusefest verbundenen Bauteil erfolgen. Die Krafteinleitung zum Verschieben des Verschiebeteils in die in Fig. 4 gezeigte Stellung erfolgt bei diesem Ausführungsbeispiel über die Stirnfläche 9, welche aus dem Gehäuse 5 hervorsteht. Bei entsprechender Krafteinwirkung wird die Stirnfläche 9 und damit das Verschiebeteil 6 in Richtung hin zu den Lichtleitern 3 bzw. zum Lichtleiterträger 10 verschoben. Hierdurch drückt das, in diesem Ausführungsbeispiel am Verschiebeteil angeordnete Betätigungselement 8 auf die in Fig. 4 gestrichelt dargestellte Außenkontur der Verschlussklappe 4, wodurch die Verschlussklappe aus der in Fig. 2 gezeigten Schließstellung in die in Fig. 4 gezeigte, vollständig geöffnete Stellung verschwenkt wird. Die Verschwenkachse 22, um die die Verschlussklappe 4 verschwenkt wird, ist in diesem Ausführungsbeispiel ein Teil der Klappenrückstellfeder 17, welche besonders gut in der Explosionsdarstellung gemäß Fig. 5 zu sehen ist. Im gezeigten Ausführungsbeispiel des Steckerteils 1 weist diese Klappenrückstellfeder 17 zwei Federschenkel 23 auf. Diese sind in Richtung aufeinander zu vorgespannt, und wirken bzw. drücken auf in diesem Ausführungsbeispiel zwei gegenüberliegend angeordnete Schrägflächen 24, welche an der Verschlussklappe 4 vorgesehen sind. Diese Schrägflächen sind schräg bzw. in einem von 0° und 180° abweichenden Winkel relativ zu den Federschenkeln angeordnet. Durch die Federbelastung der Federschenkel 23 und deren Einwirken, bzw. Drücken auf die Schrägflächen 24 der Verschlussklappe 4, wird diese sofern sie nicht vom Betätigungsglied 8 in die Öffnungsstellung gedrückt wird, in Richtung Schließstellung der Verschlussklappe 4 um die Verschwenkachse 22 verschwenkt. Die Schrägflächen 24 sind im gezeigten Ausführungsbeispiel an einer bereichsweise rohrförmigen Achsführung 25 der Verschlussklappe 4 angeordnet, wobei die Verschwenkachse 22 um die die Verschlussklappe 4 schwenkbar ist, in dieser Achsführung 25 drehbar gelagert ist. Diese Lagerung ist besonders gut in Fig. 6 zu sehen. Die Lagerung und Ausbildung der Schrägflächen 24 geht besonders gut aus den Fig. 7, 9 und 10 hervor. Die Verschwenkachse 22 wird im gezeigten Ausführungsbeispiel von zwei, gegenüber den restlichen Federschenkeln 23 abgewinkelten und hier aufeinander zuweisenden Fortsätzen 26 der jeweiligen Federschenkel 23 gebildet. Zwischen den beiden Fortsätzen 26 ist eine Lücke vorgesehen, sodass die Federschenkel 23 von den Schrägflächen 24 auseinander gedrückt werden können.

Die beiden Federschenkel 23 der Klappenrückstellfeder 17 sind im gezeigten Ausführungsbeispiel an einem Basisbogen 28 einstückig angeformt, welcher einerseits zur Abstützung und Befestigung der Klappenrückstellfeder 17 - hier am Lichtleiterträger 10-dient und andererseits auch einen Beitrag zur Vorspannung bzw. Federwirkung der Federschenkel 23 haben kann. Natürlich ist auch jede andere Befestigung der Federschenkel 23 am Lichtleiterträger 10 oder an anderen Bauteilen, welche mit dem Gehäuse 5 verbunden sind oder am Gehäuse 5 selbst denkbar. Darüber hinaus muss es sich auch nicht zwingend um zwei in Richtung aufeinander zu vorgespannte Federschenkel 23 handeln. Bei entsprechend angeordneten Schrägflächen 24 an der Verschlussklappe 4, können diese Federschenkel 23 auch in eine voneinander weg weisende Richtung vorgespannt sein. Es ist auch denkbar, eine Konstruktion mit nur einem Federschenkel 23 und gegebenenfalls auch nur einer Schrägfläche 24 auszuführen, wobei die gegenüberliegende Seite der Lagerung bzw. der Verschwenkachse 22 starr ausgeführt sein kann. In diesem Sinne kann dann auch vorgesehen sein, dass die Verschwenkachse 22 zumindest zum Teil von zumindest einem, vorzugsweise gegenüber dem Federschenkel 23 abgewinkelten, Fortsatz 26 des Federschenkels gebildet ist.

In den verschiedenen Ansichten der Verschlussklappe 4 dieses Ausführungsbeispiels gemäß Fig. 7 bis 10 sind deren bereits genannte Bestandteile noch einmal vergrößert dargestellt. Besonders gut zu sehen sind die rohrmantelförmigen Abschnitte 15 der Verschlussklappe 4, welche eine optimale Anpassung an die zylindermantelförmige Grund- bzw. Querschnittsform des Gehäuses 5 und damit einen möglichst großen Schwenkwinkel der Verschlussklappe 4 ermöglichen. Gut zu sehen sind, wie bereits erwähnt, die Achsführung 25 und die daran angeordneten Schrägflächen 24.

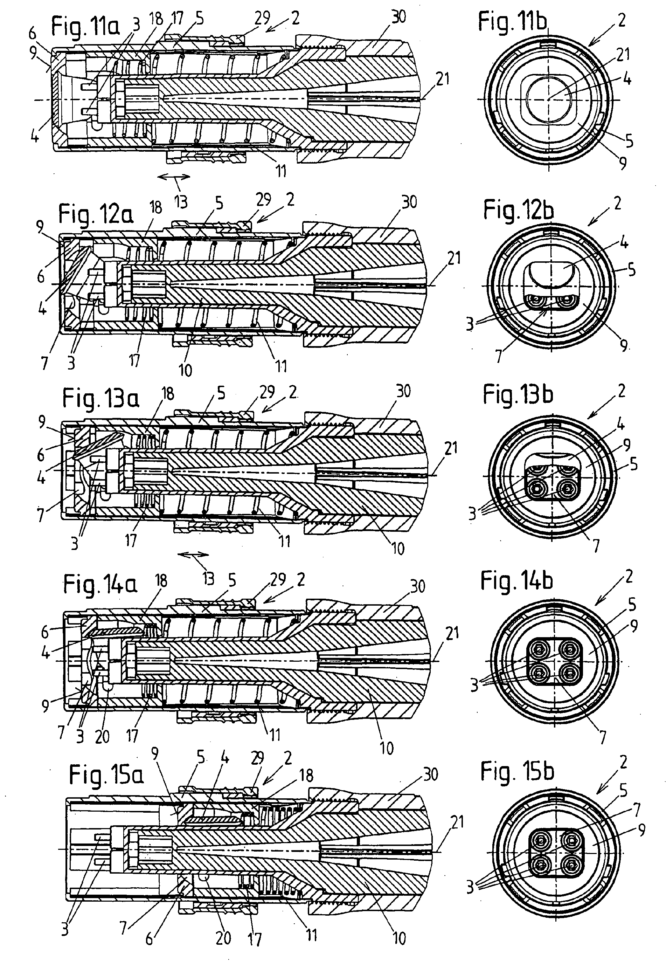

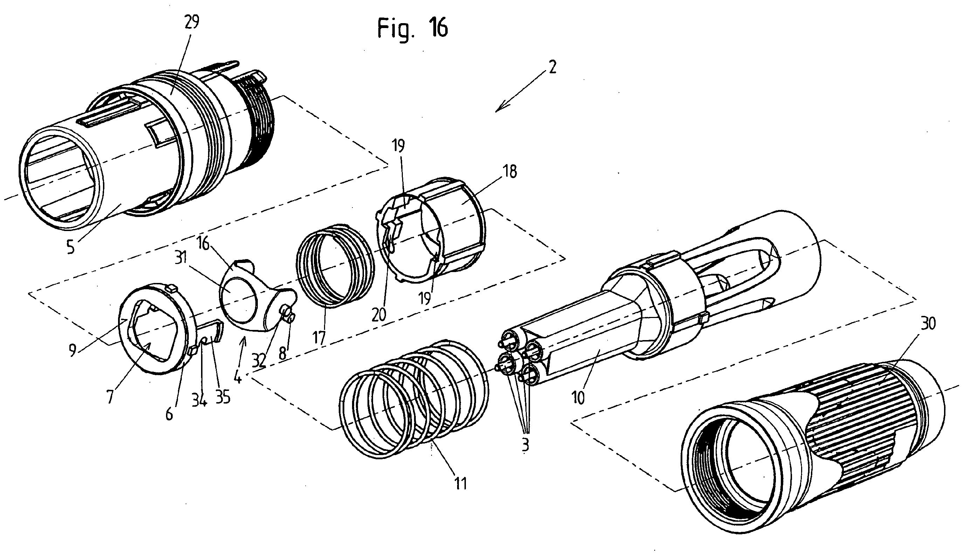

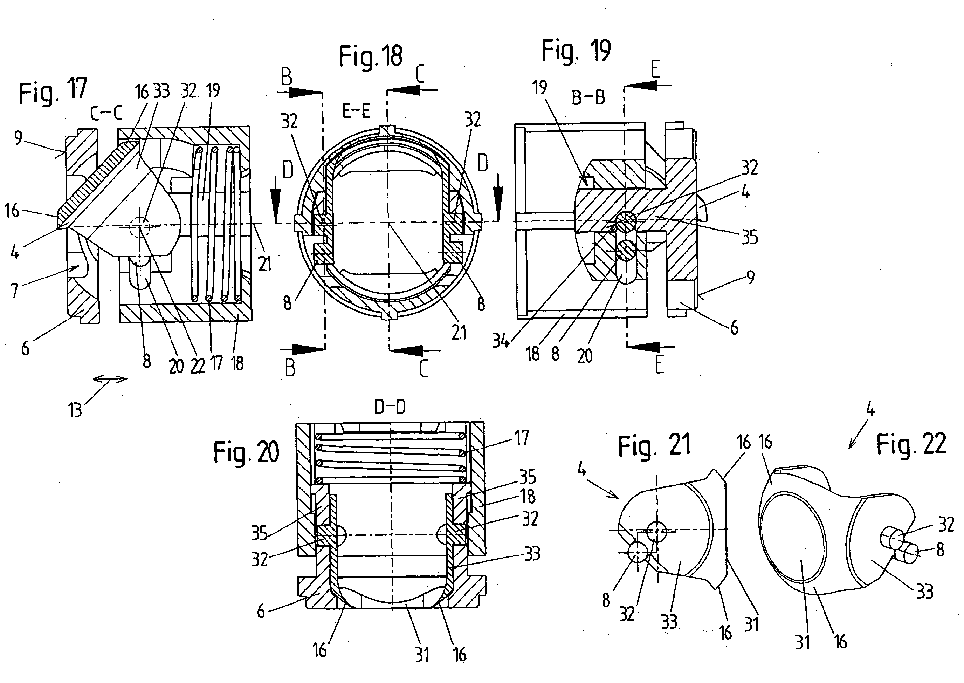

Anhand der Fig. 11a bis 22 wird nun im Folgenden der zu dem gemäß dem ersten Ausführungsbeispiel in Form einer Steckmuffe ausgebildeten Steckerteil 1 korrespondierende männliche Steckerteil bzw. Einsteckteil 2 geschildert. Dieser männliche Steckerteil bzw. Einsteckteil 2 ist derjenige Steckerteil, an oder in dem bzw. in dessen Gehäuse die männlichen bzw. hervorstehenden Lichtleiter 3 angeordnet sind, welche in die weiblichen Aufnahmehülsen der Lichtleiter der Steckmuffe 1 eingeschoben werden. Die Fig. 11a bis 15a zeigen Längsschnitte durch diesen Steckerteil 2, wobei in Fig. 11a die Schließstellung der Verschlussklappe 4 und in Fig. 15a die vollständig geöffnete Stellung der Verschlussklappe 4 bzw. die vollständig zurückgeschobene Position des Verschiebeteils 6 dargestellt ist. Die Stellung gemäß Fig. 15a wird erreicht, wenn der männliche Steckerteil 2 vollständig in den Muffensteckerteil 1 eingeschoben ist. Die Fig. 12a bis 14a zeigen verschiedene Zwischenstellungen. Die Fig. 11b bis 15b zeigen die jeweiligen Ansichten auf die Stirnseite 9 des Steckerteils 2, wobei insbesondere besonders gut der Öffnungsgrad und die Stellung der Verschlussklappe in der jeweils gezeigten Position zu sehen sind. Fig. 16 zeigt wiederum eine Explosionsdarstellung dieses Steckerteils 2, die Fig. 17 bis 20 zeigen verschiedene, jeweils in den einzelnen Figuren angegebene Schnitte durch eine Anordnung aus Verschiebeteil 6, Zusatzverschiebeteil 18 und Verschlussklappe 4 des Steckerteils 2. Die Fig. 21 und 22 zeigen die Verschlussklappe 4 dieses Steckerteils 2 an sich. Auch wenn die einzelnen Bauteile des Steckerteils 2 anders ausgeformt sind, als die korrespondierenden Bauteile des vorab beschriebenen Steckerteils 1, so wurden dennoch für die Bauteile, die jeweils dieselbe Funktion haben, dieselben Bezeichnungen und auch die selben Bezugszeichen gewählt.

Die folgende Beschreibung dieses Steckerteils 2 konzentriert sich auf die Unterschiede zum Steckerteil 1.

Einen ersten wesentlichen Unterschied bildet das am Gehäuse - hier innerhalb des Gehäuses 5 - relativ zum Gehäuse 5 linear verschiebbar gelagerte Zusatzverschiebeteil 18, welches relativ zum Verschiebeteil 6 linear verschiebbar ist. Zur Verschiebung des Verschiebeteils 6 gegen das Zusatzverschiebeteil 18 sind im gezeigten Steckerteil 2 in letzterem zwei einander gegenüberliegende Führungsnuten 19 vorgesehen, in denen das Zusatzverschiebeteil 18 bzw. dessen Arme 35 verschiebbar geführt sind. Zwischen dem Verschiebeteil 6 und dem Zusatzverschiebeteil 18 wirkt die Klappenrückstellfeder 17, welche bei diesem Steckerteil 2 als Schraubenfeder ausgeführt ist. Auch hier kann natürlich jedes, anders ausgeformte und geeignete elastische Element zum Einsatz kommen. Von der Klappenrückstellfeder 17 wird das Verschiebeteil 6 in Richtung weg vom Zusatzverschiebeteil 18 belastet bzw. vorgespannt. Durch diese Vorspannung wirkt die Klappenrückstellfeder 17 auch auf die Verschlussklappe 4, wie dies im Folgenden erläutert wird. Die Verschlussklappe 4 ist bei diesem Steckerteil 2 drehbar am Verschiebeteil 6 und hier ebenfalls linear verschiebbar in einer Zusatzführungsnut 20 am oder im Zusatzverschiebeteil 18 gelagert. Zur drehbaren Lagerung der Verschlussklappe 4 im Verschiebeteil 6, ist im konkret gezeigten Steckerteil 2 ein Paar von gegenüberliegend an den Verschlussklappenschenkeln 33 bzw. an der Verschlussklappe 4 angeordneten Achszapfen 32 vorgegeben, durch welche die Verschwenkachse 22 verläuft. Die Achszapfen 32 greifen bei diesem Steckerteil 2 jeweils in die Achszapfenaufnahmen 34 in den Armen 35 des Verschiebeteils 6 ein. Dies ist z.B. besonders gut in Fig. 19 zu sehen. Zusätzlich zur Funktion als Schwenkachse 22 sorgen die Achszapfen 32 und die Achszapfenaufnahme 34 auch dafür, dass die Verschlussklappe 4 gemeinsam mit dem Verschiebeteil 6 - beim gezeigten Steckerteil 2 linear - verschoben wird. Um bei dieser Verschiebung ein Verschwenken der Verschlussklappe 4 zu erreichen, ist bei diesem Steckerteil 2 ebenfalls ein Betätigungselement 8 vorgesehen. Dies ist im konkret ausgeführten Beispiel durch die besonders gut in den Fig. 16 und 17 bis 19 sowie 21 und 22 zu sehenden zapfenförmigen Betätigungsglieder 8 erreicht. Im konkreten Beispiel handelt es sich um zwei an den gegenüberliegenden Verschlussklappenschenkeln 33 angeordnete bzw. nach außen weisende Zapfen. Natürlich würde auch ein Zapfen als Betätigungsglied 8 ausreichen. Die Betätigungsglieder 8 dieses Beispiels sind in Zusatzführungsnuten 8 im Zusatzverschiebeteil 18 verschiebbar gelagert. Auch hier handelt es sich um eine linear verschiebbare Lagerung, was aber nicht zwingend so sein muss. Die Führungsnut 19 entlang der das Verschiebeteil 6 gegen das Zusatzverschiebeteil 18 verschoben werden kann, ist beim konkret gezeigten Steckerteil 2 orthogonal zur Zusatzführungsnut 8 angeordnet. Auch dies muss aber nicht zwingend so sein. Es ist auch eine andere, winkelige, also nicht parallele Anordnung dieser beiden Führungsnuten 19 und 20 möglich. Wird das Verschiebeteil 6 nun in Richtung hin zum Zusatzverschiebeteil 18 verschoben, indem auf die Stirnfläche 9 des Verschiebeteils 6 Druck ausgeübt wird, so werden die Achszapfen 32 gemeinsam mit dem Verschiebeteil 6 bzw. dessen Armen 35 in der Führungsnut 19 verschoben, während die Betätigungsglieder 8 eine Verschiebung in diese Richtung nicht mit ausführen können. Sie werden in der Zusatzführungsnut 20 verschoben, was zu einem Verschwenken der Verschlussklappe 4 führt. Die Rückstellung und damit auch das Verschwenken der Verschlussklappe 4 in die Schließstellung gemäß Fig. 11a und 11b und Fig. 20 erfolgt durch elastische Ausdehnung der in diese Richtung vorgespannten Klappenrückstellfeder 17, sobald keine entsprechende Gegenkraft mehr auf die Stirnfläche 9 des Verschiebeteils 6 wirkt.

Wie insbesondere den Fig. 14a und 15a zu entnehmen ist, erfolgt bei entsprechender Belastung der Stirnfläche 9 aber nicht nur eine Relativverschiebung zwischen Verschiebeteil 6 und Zusatzverschiebeteil 18. Diese beiden Bauteile werden vielmehr gemeinsam auch in das Gehäuseinnere hineingeschoben. Dies erfolgt unter Stauchung der Rückstellfeder 11, auch bei diesem Steckerteil 2 ist diese am Lichtleiterträger 10 abgestützt, was aber, wie bereits eingangs bezüglich des Steckerteils 1 erläutert, nicht die einzig mögliche Ausführungsvariante ist. Bei Verschieben des Verschiebeteils 6 und des Zusatzverschiebeteils 18 treten die Lichtleiter 3 und ein Teil des Lichtleiterträgers 10 durch die bereits geöffnete Durchtrittsöffnung 7 hindurch, was wie weiter unten noch erläutert, dazu dient, dass die Lichtleiter 3 des Steckerteils 2 mit den im Steckerteil 1 angeordneten Lichtleitern 3 verbunden werden können. Entfällt die Belastung bzw. der entsprechende Druck auf die Stirnfläche 9 des Verschiebeteils 6, so sorgt die Rückstellfeder 11 dafür, dass das Zusatzverschiebeteil 18 gemeinsam mit dem Verschiebeteil 6 wieder in die in Fig. 14a gezeigte Stellung zurückgeschoben wird. Die Klappenrückstellfeder 17 sorgt für die restliche Rückstellung in die in Fig. 11a gezeigte Schließstellung der Verschlussklappe 4 in der das Verschiebeteil 6 vom Zusatzverschiebeteil 18 in Verschieberichtung 13 bzw. die hier ebenfalls dazu parallel verlaufende Richtung der Längsmittelachse 21 beabstandet ist. Um beim Öffnen von der in Fig. 11a gezeigten Stellung in die in Fig. 15a gezeigte Stellung zunächst die Verschlussklappe 4 zu öffnen bzw. zu verschwenken und daran anschließend die Verschiebung des Verschiebeteils gemeinsam mit dem Zusatzverschiebeteil vorzunehmen, ist die Klappenrückstellfeder 17 günstigerweise weicher bzw. mit geringeren Kräften deformierbar als die Rückstellfeder 11. Dies gilt vorzugsweise allgemein und insbesondere auch beim Steckerteil 1.

Wie insbesondere den Fig. 21 und 22 zu entnehmen ist, weist die Verschlussklappe 4 aus den bereits genannten Gründen abgerundete Bereiche auf. Beim gezeigten Steckerteil 2 handelt es sich dabei um Kugeloberflächenabschnitte 16. Damit die Verschlussklappe 4 in der Schließstellung gemäß Fig. 11a und Fig. 20 nicht über den Verschiebeteil 6 hervorsteht, hat sie zentral einen abgeflachten Bereich 31.

Wie insbesondere den Fig. 17 bis 19 zu entnehmen ist, liegt die beim konkreten Steckerteil 2 durch die Achszapfen 32 vorgegebene Verschwenkachse 22 der Verschlussklappe 4, insbesondere in der Schließstellung der Verschlussklappe 4, hier aber auch in allen anderen Stellungen relativ nah an der Längsmittelachse 21. Sie bildet auch den Mittelpunkt der Kugeloberflächenabschnitte 16, was zu einem platzoptimierten Verschwenken der Verschlussklappe 4 führt. Günstigerweise ist dabei vorgesehen, dass der Abstand zwischen der Längsmittelachse 21 des Gehäuses 5 bzw. des Verschiebeteils 6 und der Verschwenkachse 22, um die die Verschlussklappe 4 verschwenkbar ist, weniger als 10%, vorzugsweise weniger als 5%, des maximalen Außendurchmessers des Verschiebeteils beträgt. Natürlich handelt es sich bei der Längsmittelachse 21 und in den meisten Fällen auch bei der Verschwenkachse 22 nicht um physisch tatsächlich vorhandene, durchgehende Achsen. Ihre Lage ist aber zeichnerisch einfach zu ermitteln, wie dies die Fig. 17 bis 19 zeigen. Der Abstand ist dabei die kleinste Entfernung zwischen Längsmittelachse 21 und Verschwenkachse 22. Wie bei diesem Steckerteil 2 gezeigt, ist besonders bevorzugt vorgesehen, dass die Verschwenkachse 22, um die die Verschlussklappe 4 verschwenkbar ist, exzentrisch bezüglich einer Längsmittelachse 21 des Gehäuses 5 bzw. des Verschiebeteils 6 angeordnet ist. Exzentrisch bedeutet dabei, dass die Verschwenkachse 22 die Längsmittelachse 21 nicht schneidet, sondern eben mit einem, wenn auch vorzugsweise geringen Abstand zu dieser angeordnet ist. Durch diese Exzentrizität wird erreicht, dass die Verschlussklappe 4 bereits am Beginn der Verschwenkbewegung aus der Schließstellung gemäß Fig. 11a von ihrem Sitz im Verschiebeteil 6 leicht abgehoben wird. Dies schont zum einen eine gegebenenfalls zwischen Verschlussklappe 4 und Verschiebeteil 6 angeordnete Dichtung. Zum anderen wird verhindert, dass die Verschlussklappe 4 beim Verschwenken an dem sie fassenden Sitz des Verschiebeteils 6 entlang schabt. All dies ist günstig im Sinne einer langen Lebensdauer des Steckerteils. Darüber hinaus wird durch die genannte exzentrische Lage der Verschwenkachse auch erreicht, dass bereits nach kurzer Schwenkbewegung die Reibungskräfte und damit die Öffnungskräfte klein werden.

Zu erwähnen ist auch noch der Gehäuseendabschluss 30, welcher beim gezeigten Steckerteil 2 auf dessen Gehäuse 5 aufgeschraubt werden kann. Dies ist günstig im Sinne einer einfachen Montage des Steckerteils 2, aber auch nicht zwingend notwendig. Das Gehäuse 5 kann auch einen einstückig angeformten Abschluss aufweisen.

Darüber hinaus ist am Steckerteil 2 auch noch eine an sich bekannte Arretierhülse 29 vorgesehen. Diese dient dazu, den Steckerteil 2 mit dem Steckerteil 1 zu verrasten, wenn diese vollständig ineinander geschoben und damit verbunden sind, um ein ungewolltes Lösen dieser Verbindung zu vermeiden. Die Arretierhülse 29 und ihr Verrasten auf dem Steckerteil 1 können wie beim Stand der Technik bekannt ausgeführt werden, sodass sich weitere Erläuterungen hierzu erübrigen.

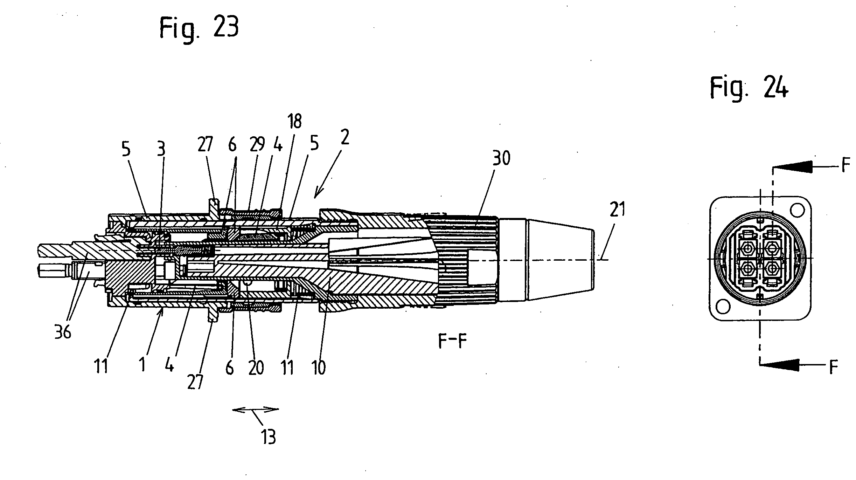

Fig. 23 zeigt nun noch eine teilweise geschnittene Darstellung der miteinander vollständig verbundenen Steckerteile 1 und 2, in dieser Stellung sind die jeweiligen Lichtleiter 3 der beiden Steckerteile so miteinander verbunden, dass Lichtsignale übertragen werden können. Fig. 24 zeigt die Schnittlinie FF der Fig. 23. In der dargestellten, kontaktierten Stellung liegen die beiden Stirnflächen 9 der jeweiligen Verschiebeteile 6 aneinander an. Die jeweiligen Verschlussklappen 4 sind vollständig geöffnet, die Verschiebeteile 6 sind jeweils maximal in die jeweiligen Gehäuse 5 eingeschoben, der Lichtleiterträger 10 des männlichen Steckerteils 2 hat samt seiner Lichtleiter die Durchtrittsöffnungen 7 in beiden Verschiebeteilen 6 durchdrungen, sodass die Lichtleiter 3 dieser beiden Steckerteile 1 und 2 vis-a-vis miteinander in Kontakt gebracht wurden, wie dies an sich bekannt ist. Im konkret dargestellten Ausführungsbeispiel sind auf der gegenüberliegenden Seite des Steckerteils 2 an sich bekannte und z.B. in der DE 10 2004 025 512 A1 gezeigte Kabelstecker 36 in das Steckerteil1 eingeschoben, welche die Lichtleiter 3 des Steckerteils 1 bilden. Dies muss aber nicht zwingend so sein, die Lichtleiter 3 des Steckerteils 1 können auch fix in diesem angeordnet sein.

Zum Entfernen des Steckerteils 2 aus dem Steckerteil 1 muss die Arretierhülse 29 entsprechend betätigt werden, sodass die durch sie vorgegebene Verbindung zwischen den beiden Steckerteilen gelöst wird, anschließend kann das Steckerteil 2 aus dem Steckerteil 1 herausgezogen werden, wodurch die Verschiebeteile 6 und die jeweiligen Verschlussklappen 4 von den jeweiligen Klappenrückstellfedern 17 und den Rückstellfedern 11 wieder in ihre Schließstellungen gemäß der Fig. 11a und Fig. 1 und 2 zurückgestellt werden. Beim Wiedereinstecken des Steckerteils 2 in den Steckerteil 1 treffen zunächst die beiden Stirnflächen 9 der Verschiebeteile 6 aufeinander, wodurch diese wieder verschoben und die Verschlussklappen 4 automatisch geöffnet werden, wodurch durch weiteres Einschieben des Steckerteils 2 in den Steckerteil 1 wieder die in Fig. 23 gezeigte Verbindungsstellung erreicht wird.

**Legende zu den Hinweisziffern:**

| | | | |
|---|---|---|---|
| 1 | Steckerteil | 23 | Federschenkel |
| 2 | Steckerteil | 24 | Schrägfläche |
| 3 | Lichtleiter | 25 | Achsführung |
| 4 | Verschlussklappe | 26 | Fortsatz |
| 5 | Gehäuse | 27 | Befestigungsflansch |
| 6 | Verschiebeteil | 28 | Basisbogen |
| 7 | Durchtrittsöffnung | 29 | Arretierhülse |
| 8 | Betätigungsglied | 30 | Gehäuseendabschluss |
| 9 | Stirnfläche | 31 | Abflachung |
| 10 | Lichtleiterträger | 32 | Achszapfen |
| 11 | Rückstellfeder | 33 | Verschlussklappenschenkel |
| 12 | Dichtungsring | 34 | Achszapfenaufnahme |
| 13 | Verschieberichtung | 35 | Arm |
| 14 | Führungsraum | 36 | Kabelstecker |
| 15 | Rohrmantelabschnitt | | |
| 16 | Kugeloberflächenabschnitt | | |
| 17 | Klappenrückstellfeder | | |
| 18 | Zusatzverschiebeteil | | |
| 19 | Führungsnut | | |
| 20 | Zusatzführungsnut | | |
| 21 | Längsmittelachse | | |
| 22 | Verschwenkachse | | |

## Patentansprüche

1. Steckerteil (1) für eine optische Steckverbindung zum miteinander Verbinden von Lichtleitern (3), wobei der Steckerteil (1) zumindest eine verschwenkbare Verschlussklappe (4) und ein Gehäuse (5) und zumindest einen, innerhalb des Gehäuses (5) angeordneten, Lichtleiter (3) aufweist, und am Gehäuse (5), insbesondere innerhalb des Gehäuses (5), zumindest ein relativ zum Gehäuse (5), insbesondere linear, verschiebbares Verschiebeteil (6) gelagert ist, wobei das Verschiebeteil (6) zumindest eine Durchtrittsöffnung (7) aufweist und das Steckerteil (1) zum Verschwenken der Verschlussklappe (4) zumindest ein Betätigungsglied (8) aufweist, wobei das Betätigungsglied (8) beim Verschieben des Verschiebeteils (6) die Verschlussklappe (4) verschwenkt, wobei die Durchtrittsöffnung (7) im Verschiebeteil (6) in zumindest einer Schließstellung der Verschlussklappe (4), vorzugsweise vollständig, von der Verschlussklappe (4) verschlossen ist, **dadurch gekennzeichnet, dass** zumindest ein Dichtungsring (12) zwischen dem Verschiebeteil (6) und dem Gehäuse (5) oder zwischen dem Verschiebeteil (6) und einem anderen, vorzugsweise gehäusefesten, Bauteil des Steckerteils (1), vorzugsweise einem Lichtleiterträger (10), angeordnet ist, wobei der Dichtungsring (12) in einem parallel zu einer Verschieberichtung (13) des Verschiebeteils (6) längs erstreckten, vorzugsweise ringmantelförmigen, Führungsraum (14) angeordnet ist und der Dichtungsring (12) des Verschiebeteils (6) in dem Führungsraum (14) in der Verschieberichtung (13) verschiebbar gelagert ist.

2. Steckerteil (1) nach Anspruch 1, **dadurch gekennzeichnet, dass** das Verschiebeteil (6) eine Stirnfläche (9) aufweist, welche, vorzugsweise zumindest in der Schließstellung der Verschlussklappe (4), auf einer vom Lichtleiter (3) abgewandten Außenseite des Verschiebeteils (6) angeordnet ist, und die Durchtrittsöffnung (7) eine Öffnung in der Stirnfläche (9) ist.

3. Steckerteil (1) nach Anspruch 1 oder 2, **dadurch gekennzeichnet, dass** innerhalb des Gehäuses (5) zumindest zwei, vorzugsweise zumindest drei oder zumindest vier, Lichtleiter (3) angeordnet sind.

4. Steckerteil (1) nach Anspruch 3, **dadurch gekennzeichnet, dass** die Lichtleiter (3), vorzugsweise gemeinsam, in einem Lichtleiterträger (10) gehalten sind, welcher, vorzugsweise relativ zum Gehäuse (5) unverschiebbar, innerhalb des Gehäuses (5) angeordnet ist.

5. Steckerteil (1) nach Anspruch 3 oder 4, **dadurch gekennzeichnet, dass** die, vorzugsweise alle, innerhalb des Gehäuses (5) des Steckerteils (1) angeordneten Lichtleiter (3) gemeinsam, vorzugsweise der innerhalb des Gehäuses (5) des Steckerteils (1) angeordnete Lichtleiterträger (10), oder die, vorzugsweise alle, Lichtleiter (3) eines anderen Steckerteils (2) der Steckverbindung gemeinsam und/oder ein Lichtleiterträger (10) eines anderen Steckerteils (2) der Steckverbindung in zumindest einer Stellung des Verschiebeteils (6), in der die Verschlussklappe (4) die Durchtrittsöffnung (7), vorzugsweise vollständig, freigibt, durch die Durchtrittsöffnung (7) hindurchgeführt sind (ist).

6. Steckerteil (1) nach einem der Ansprüche 1 bis 5, **dadurch gekennzeichnet, dass** er zumindest eine, vorzugsweise am Gehäuse (5) oder an einem Lichtleiterträger (10) abgestützte, Rückstellfeder (11) für das Verschiebeteil (6) aufweist, gegen deren Kraftwirkung das Verschiebeteil (6) aus seiner Stellung, in der die Verschlussklappe (4) die Durchtrittsöffnung (7) verschließt, in Richtung hin zu dem (den) Lichtleiter(n) (3) verschiebbar ist.

7. Steckerteil (1) nach einem der Ansprüche 1 bis 6, **dadurch gekennzeichnet, dass** der Dichtungsring (12) des Verschiebeteils (6) in dem Führungsraum (14) rollend in der Verschieberichtung (13) verschiebbar gelagert ist.

8. Steckerteil (1) nach einem der Ansprüche 1 bis 7, **dadurch gekennzeichnet, dass** die Verschlussklappe (4) zumindest abschnittsweise eine gebogene, vorzugsweise in Form eines Rohrmantelabschnitts (15) oder eines Zylindermantelabschnitts oder einer Kugeloberfläche (16) ausgebildete, Außenkontur aufweist.

9. Steckerteil (1) nach einem der Ansprüche 1 bis 8, **dadurch gekennzeichnet, dass** eine Klappenrückstellfeder (17) vorgesehen ist, welche die Verschlussklappe (4) in Richtung ihrer Schließstellung beaufschlagt, vorzugsweise bei Entlastung des Verschiebeteils (6) von von außen wirkenden Kräften die Verschlussklappe (4) in die Schließstellung zurückstellt, und/oder dass das Steckerteil (1) zumindest ein am Gehäuse (5), insbesondere innerhalb des Gehäuses (5), relativ zum Gehäuse (5), insbesondere linear, verschiebbar gelagertes Zusatzverschiebeteil (18) aufweist und das Verschiebeteil (6) relativ zum Zusatzverschiebeteil (18), vorzugsweise linear, verschiebbar gelagert ist.

10. Steckerteil (1) nach Anspruch 9, **dadurch gekennzeichnet, dass** die Klappenrückstellfeder (17) zwischen dem Verschiebeteil (6) und dem Zusatzverschiebeteil (18) wirkt, vorzugsweise angeordnet ist, und vorzugsweise das Verschiebeteil (6) in Richtung weg vom Zusatzverschiebeteil (18) belastet.

11. Steckerteil (1) nach Anspruch 9 oder 10, **dadurch gekennzeichnet, dass** das Verschiebeteil (6) relativ zum Zusatzverschiebeteil (18), vorzugsweise linear, verschiebbar in zumindest einer, vorzugsweise in zwei einander gegenüberliegenden, Führungsnut(en) (19) im oder am Zusatzverschiebeteil (18) gelagert ist, und/oder dass die Verschlussklappe (4) drehbar am Verschiebeteil (6) und, vorzugsweise linear, verschiebbar in einer Zusatzführungsnut (20) am oder im Zusatzschiebeteil (18) gelagert ist.

12. Steckerteil (1) nach einem der Ansprüche 1 bis 11, **dadurch gekennzeichnet, dass** der Abstand zwischen einer Längsmittelachse (21) des Gehäuses (5) bzw. des Verschiebeteils (6) und einer Verschwenkachse (22), um die die Verschlussklappe (4) verschwenkbar ist, weniger als 10%, vorzugsweise weniger als 5%, des maximalen Außendurchmessers des Verschiebeteils beträgt, oder dass eine Verschwenkachse (22), um die die Verschlussklappe (4) verschwenkbar ist, exzentrisch bezüglich einer Längsmittelachse (21) des Gehäuses (5) bzw. des Verschiebeteils (6) angeordnet ist.

13. Steckerteil (1) nach Anspruch 9, **dadurch gekennzeichnet, dass** die Klappenrückstellfeder (17) zumindest einen, vorzugsweise zumindest zwei in Richtung aufeinander zu oder voneinander weg, vorgespannte(n) Federschenkel (23) aufweist, und die, vorzugsweise zwischen den Federschenkeln (23) angeordnete und/oder eingespannte, Verschlussklappe (4) zumindest eine, vorzugsweise zwei, Schrägfläche(n) (24) aufweist, wobei der oder die Federschenkel (23), zur Rückstellung der Verschlussklappe (4) in Richtung deren Schließstellung, auf die Schrägfläche(n) (24) der Verschlussklappe (4) wirkt (wirken) bzw. drückt (drücken).

14. Steckerteil (1) nach Anspruch 13, **dadurch gekennzeichnet, dass** die Schrägfläche(n) (24) an einer bereichsweise rohrförmigen Achsführung (25) der Verschlussklappe (4) angeordnet ist (sind), wobei eine Verschwenkachse (22), um die die Verschlussklappe (4) schwenkbar ist, in dieser Achsführung (25) drehbar gelagert ist.

15. Steckverbindung mit einem Steckerteil (1), vorzugsweise mit zumindest zwei, Steckerteilen (1) nach einem der Ansprüche 1 bis 14.

## Claims

1. A plug part (1) for an optical plug-in connection for the connection to one another of light guides (3), wherein the plug part (1) has at least one pivotable closing flap (4) and a housing (5) and at least one light guide (3) which is arranged within the housing (5), and at least one displacement part (6), displaceable relative to the housing (5), in particular linearly, is mounted on the housing (5), in particular within the housing (5), wherein the displacement part (6) has at least one passage opening (7) and the plug part (1) has at least one operating member (8) for pivoting of the closing flap (4), wherein the operating member (8) pivots the closing flap (4) upon displacement of the displacement part (6), wherein the passage opening (7) in the displacement part (6) is closed by the closing flap (4), preferably completely, in at least one closing position of the closing flap (4), **characterised in that** at least one sealing ring (12) is arranged between the displacement part (6) and the housing (5) or between the displacement part (6) and another component part of the plug part (1), which component part is preferably fixed to the housing and is preferably a light guide support (10), wherein the sealing ring (12) is arranged in a guide space (14), extended longitudinally parallel to a displacement direction (13) of the displacement part (6) and preferably in the form of an annular jacket, and the sealing ring (12) of the displacement part (6) is displaceably mounted in the displacement direction (13) in the guide space (14).

2. A plug part (1) according to claim 1, **characterised in that** the displacement part (6) has an end face (9) which, preferably at least in the closing position of the closing flap (4), is arranged on an outer surface, remote from the light guide (3), of the displacement part (6), and the passage opening (7) is an opening in the end face (9).

3. A plug part (1) according to claim 1 or 2, **characterised in that** at least two, preferably at least three or at least four, light guides (3) are arranged within the housing (5).

4. A plug part (1) according to claim 3, **characterised in that** the light guides (3) are, preferably jointly, held in a light guide support (10) which is arranged within the housing (5), preferably in a manner non-displaceable relative to the housing (5).

5. A plug part (1) according to claim 3 or 4, **characterised in that** the light guide (3), preferably all light guides (3) jointly, arranged within the housing (5) of the plug part (1), preferably the light guide support (10) arranged within the housing (5) of the plug part (1), or the light guide (3), preferably all light guides (3) jointly, of another plug part (2) of the plug-in connection and/or a light guide support (10) of another plug part (2) of the plug-in connection is/are passed through the passage opening (7) in at least one position of the displacement part (6) in which the closing flap (4) frees the passage opening (7), preferably completely.

6. A plug part (1) according to any one of claims 1 to 5, **characterised in that** it has at least one return spring (11), preferably supported on the housing (5) or on a light guide support (10), for the displacement part (6), against the force action of which the displacement part (6) is displaceable, from its position in which the closing flap (4) closes the passage opening (7), towards the light guide(s) (3).

7. A plug part (1) according to any one of claims 1 to 6, **characterised in that** the sealing ring (12) of the displacement part (6) is displaceably mounted in the guide space (14) in a manner so as to roll in the displacement direction (13).

8. A plug part (1) according to any one of claims 1 to 7, **characterised in that** at least portions of the closing flap (4) have a curved outer contour preferably in the form of a pipe jacket portion (15) or a cylinder jacket portion or a spherical surface (16).

9. A plug part (1) according to any one of claims 1 to 8, **characterised in that** a flap return spring (17) is provided and acts upon the closing flap (4) in the direction of its closing position, preferably upon relieving the displacement part (6) of forces acting from the exterior restores the closing flap (4) into the closing position, and/or **in that** the plug part (1) has at least one additional displacement part (18) displaceably mounted on the housing (5), in particular within the housing (5), relative to the housing (5), in particular linearly, and the displacement part (6) is displaceably mounted relative to the additional displacement part (18), preferably linearly.

10. A plug part (1) according to claim 9, **characterised in that** the flap return spring (17) acts between the displacement part (6) and the additional displacement part (18), is preferably arranged therebetween, and preferably loads the displacement part (6) in the direction away from the additional displacement part (18).

11. A plug part (1) according to claim 9 or 10, **characterised in that** the displacement part (6) is displaceably mounted relative to the additional displacement part (8), preferably linearly, in at least one, preferably two facing, guide groove(s) (19) in or on the additional displacement part (18), and/or **in that** the closing flap (4) is rotatably mounted on the displacement part (6) and, preferably linearly, displaceably mounted in an additional guide groove (20) at or in the additional slide part (18).

12. A plug part (1) according to any one of claims 1 to 11, **characterised in that** the distance between a longitudinal central axis (21) of the housing (5) or the displacement part (6) and a pivot axis (22) about which the closing flap (4) is pivotable is less than 10%, preferably less than 5%, of the maximum outer diameter of the displacement part, or **in that** a pivot axis (22) about which the closing flap (4) is pivotable is arranged in an eccentric manner with regard to a longitudinal central axis (21) of the housing (5) or the displacement part (6).

13. A plug part (1) according to claim 9, **characterised in that** the flap return spring (17) has at least one, preferably at least two spring legs (23) pretensioned towards or away from one another, and the closing flap (4), preferably arranged and/or clamped between the spring legs (23), has at least one, preferably two, oblique face(s) (24), wherein for restoration of the closing flap (4) in the direction of its closing position, the spring leg(s) (23)acts(s) or press(es) upon the oblique face(s) (24) of the closing flap (4).

14. A plug part (1) according to claim 13, **characterised in that** the oblique face(s) (24) is/are arranged on an axial guide (25), tubular in regions, of the closing flap (4), wherein a pivot axis (22), about which the closing flap (4) is pivotable, is rotatably mounted in this axial guide (25).

15. A plug-in connection having a plug part (1), preferably having at least two plug parts (1), according to any one of claims 1 to 14.

## Revendications

1. Partie d'enfichage (1) pour une connexion optique par enfichage en vue de relier des guides optiques (3) entre eux, la partie d'enfichage (1) étant munie d'au moins un volet de fermeture (4) pivotant et d'un boîtier (5) et d'au moins un guide optique (3) disposé à l'intérieur du boîtier (5), et au moins une pièce coulissante (6) étant logée sur le boîtier (5), en particulier à l'intérieur du boîtier (5), de façon coulissante par rapport au boîtier (5), notamment de façon linéaire, la pièce coulissante (6) étant munie d'au moins une ouverture de passage (7) et la partie d'enfichage (1) étant munie d'au moins un organe d'actionnement (8) pour faire pivoter le volet de fermeture (4), l'organe d'actionnement (8) faisant pivoter le volet de fermeture (4) lors du coulissement de la pièce coulissante (6), l'ouverture de passage (7) dans la pièce coulissante (6) étant fermée, dans au moins une position fermée du volet de fermeture (4), par le volet de fermeture (4), de préférence complètement, **caractérisée en ce qu'**au moins une bague d'étanchéité (12) est disposée entre la pièce coulissante (6) et le boîtier (5) ou entre la pièce coulissante (6) et un autre constituant de la partie d'enfichage (1), de préférence fixé au boîtier, de préférence un support de guides optiques (10), la bague d'étanchéité (12) étant disposée dans un espace de guidage (14) qui s'étend longitudinalement parallèlement à une direction de coulissement (13) de la pièce coulissante (6), de préférence en forme d'enveloppe annulaire, et la bague d'étanchéité (12) de la partie coulissante (6) étant logée dans l'espace de guidage (14) de manière à pouvoir coulisser dans la direction de coulissement (13).

2. Partie d'enfichage (1) selon la revendication 1, **caractérisée en ce que** la pièce coulissante (6) est munie d'une face frontale (9) qui, de préférence au moins dans la position fermée du volet de fermeture (4), est disposée sur un côté extérieur de la pièce coulissante (6) opposé au guide optique (3), et l'ouverture de passage (7) est une ouverture dans la face frontale (9).

3. Partie d'enfichage (1) selon la revendication 1 ou 2, **caractérisée en ce qu'**au moins deux, de préférence au moins trois ou au moins quatre, guides optiques (3) sont disposés à l'intérieur du boîtier (5).

4. Partie d'enfichage (1) selon la revendication 3, **caractérisée en ce que** les guides optiques (3) sont maintenus, de préférence ensemble, dans un support de guides optiques (10) qui est disposé à l'intérieur du boîtier (5), de préférence non coulissant par rapport au boîtier (5).

5. Partie d'enfichage (1) selon la revendication 3 ou 4, **caractérisée en ce que**, dans au moins une position de la pièce coulissante (6) dans laquelle le volet de fermeture (4) découvre, de préférence complètement, la fenêtre de passage (7), les guides optiques (3), de préférence tous, disposés à l'intérieur du boîtier (5) de la partie d'enfichage (1) sont guidés ensemble à travers l'ouverture de passage (7), de préférence le support de guides optiques (10) disposé à l'intérieur du boîtier (5) de la partie d'enfichage (1) est guidé à travers l'ouverture de passage (7), ou les guides optiques (3), de préférence tous, d'une autre partie d'enfichage (2) de la connexion par enfichage sont guidés ensemble à travers l'ouverture de passage (7), et/ou un support de guides optiques (10) d'une autre partie d'enfichage (2) de la connexion enfichable est guidé à travers l'ouverture de passage (7).

6. Partie d'enfichage (1) selon l'une des revendications 1 à 5, **caractérisée en ce qu'**elle est munie d'au moins un ressort de rappel (11) pour la pièce coulissante (6), de préférence en appui sur le boîtier (5) ou sur un support de guides optiques (10), contre l'action de force duquel la pièce coulissante (6) peut être coulissée de sa position dans laquelle le volet de fermeture (4) ferme l'ouverture de passage (7), en direction du ou des guides optiques (3).

7. Partie d'enfichage (1) selon l'une des revendications 1 à 6, **caractérisée en ce que** la bague d'étanchéité (12) de la pièce coulissante (6) est logée coulissante dans l'espace de guidage (14) de manière à pouvoir rouler dans la direction de coulissement (13).

8. Partie d'enfichage (1) selon l'une des revendications 1 à 7, **caractérisée en ce que** le volet de fermeture (4) est muni, au moins par sections, d'un contour extérieur courbé, de préférence sous la forme d'une section d'enveloppe tubulaire (15) ou d'une section d'enveloppe cylindrique ou d'une surface sphérique (16).

9. Partie d'enfichage (1) selon l'une des revendications 1 à 8, **caractérisée en ce qu'**il est prévu un ressort de rappel de volet (17) qui agit sur le volet de fermeture (4) dans la direction de sa position fermée, de préférence ramène le volet de fermeture (4) en position fermée lorsque la pièce coulissante (6) est libérée des forces agissant de l'extérieur, et/ou **en ce que** la partie d'enfichage (1) est munie d'au moins une pièce coulissante supplémentaire (18) qui est logée sur le boîtier (5), en particulier à l'intérieur du boîtier (5), de façon coulissante par rapport au boîtier (5), notamment de façon linéaire, et la pièce coulissante (6) est logée coulissante par rapport à la pièce coulissante supplémentaire (18), de préférence de manière linéaire.

10. Pièce d'enfichage (1) selon la revendication 9, **caractérisée en ce que** le ressort de rappel de volet (17) agit, de préférence est, entre la pièce coulissante (6) et la pièce coulissante supplémentaire (18), et de préférence et de préférence sollicite la pièce coulissante (6) dans la direction opposée à la pièce coulissante supplémentaire (18).

11. Pièce d'enfichage (1) selon la revendication 9 ou 10, **caractérisée en ce que** la pièce coulissante (6) est logée coulissante par rapport à la pièce coulissante supplémentaire (18), de préférence de façon linéaire, dans au moins une rainure de guidage (19), de préférence dans deux rainures situées à l'opposé l'une de l'autre, dans ou sur la pièce coulissante supplémentaire (18), et/ou **en ce que** le volet de fermeture (4) est logé rotatif sur la pièce coulissante (6) et coulissant, de préférence de façon linéaire, dans une rainure de guidage supplémentaire (20) sur ou dans la pièce coulissante supplémentaire (18).

12. Pièce d'enfichage (1) selon l'une des revendications 1 à 11, **caractérisée en ce que** la distance entre un axe central longitudinal (21) du boîtier (5) ou de la pièce coulissante (6) et un axe de pivotement (22) autour duquel peut pivoter le volet de fermeture (4), est inférieure à 10 %, de préférence inférieur à 5 %, du diamètre extérieur maximal de la pièce coulissante, ou **en ce qu'**un axe de pivotement (22), autour duquel le volet de fermeture (4) peut pivoter, est disposé de manière excentrée par rapport à un axe central longitudinal (21) du boîtier (5) ou de la pièce coulissante (6).

13. Pièce d'enfichage (1) selon la revendication 9, **caractérisée en ce que** le ressort de rappel de volet (17) est muni d'au moins une branche de ressort (23) précontrainte, de préférence d'au moins deux branches de ressort précontraintes en direction l'une de l'autre ou à l'opposé l'une de l'autre, et le volet de fermeture (4), qui est de préférence disposé et/ou mis sous tension entre les branches de ressort (23), est muni d'au moins une, de préférence deux, surface(s) inclinée(s) (24), la ou les branches de ressort (23) agissant ou appuyant sur la ou les surfaces inclinées (24) du volet de fermeture (4) pour ramener le volet de fermeture (4) dans la direction de sa position fermée.

14. Pièce d'enfichage (1) selon la revendication 13, **caractérisée en ce que** la ou les surfaces inclinées (24) sont disposées sur un guide axial (25) par endroit tubulaire du volet de fermeture (4), un axe de pivotement (22), autour duquel le volet de fermeture (4) peut pivoter, étant logé pivotant dans ce guide axial (25).

15. Connexion enfichable avec une partie enfichable (1), de préférence avec au moins deux parties enfichables (1) selon l'une des revendications 1 à 14.
